# EUROPEAN PATENT APPLICATION

(11) **EP 2 372 518 A2**
(43) Date of publication of application: **05.10.2011**
(21) Application number: 11160637.2
(22) Date of filing: 31.03.2011
(51) Int. Cl.: G06F 3/048

(54) **Apparatus and method for touch input in portable terminal**

(30) Priority: 02.04.2010 KR 20100030244
(71) Applicant: Samsung Electronics Co., Ltd., Yeoungtong-gu Suwon-si, Gyeonggi-do (KR)
(72) Inventor: Seo, Suck-Ho, Gyeonggi-do (KR); Kim, Jae-Hwan, Gyeonggi-do (KR)
(74) Representative: Jenkins, Richard Gavin

(57) **Abstract**

An apparatus and method for touch input in a portable terminal are provided. The apparatus includes a pattern determining unit and an input determining unit. The pattern determining unit determines an input pattern of a user by analyzing a touch input generated at a point outside an input region set to input data. The input determining unit determines candidate input regions in a vicinity of coordinates of the touch input point, and estimates a desired input region of the user among the candidate input regions on a basis of an input pattern of the user.

## Description

### BACKGROUND OF THE INVENTION

### 1. Field of the Invention:

The present invention relates generally to an apparatus and method for touch input in a portable terminal. More particularly, the present invention relates to an apparatus and method for adaptively changing a range of a key input region to accurately determine the touch input of a user in a portable terminal with a QWERTY keypad.

### 2. Description of the Related Art:

The use of portable terminals is rapidly increasing, and service providers (terminal manufacturers) are competitively developing portable terminals with convenient functions in order to attract more users.

For example, the portable terminals provide various functions such as a phone book, a game, a scheduler, a Short Message Service (SMS), a Multimedia Message Service (MMS), a Broadcast Message Service (BMS), an Internet service, an Electronic mail (E-mail) service, a morning call, a Motion Picture Expert Group (MPEG)-1 or MPEG-2 Audio Layer-3 (MP3) player, a digital camera, and other similar products and services.

A touchscreen-type portable terminal is developed to enable the user to easily write a text or draw a line in the portable terminal with a stylus pen or a finger, and it may provide a QWERTY keyboard function for displaying a keyboard format on the touchscreen.

In order to provide the touch keyboard function, the portable terminal detects the (X, Y) coordinates of a user's touch input point and performs a mapping operation on the detected (X, Y) coordinates.

However, the QWERTY keyboard has keys arranged at short intervals, thus making it difficult to provide a desired touch input of the user.

For example, a touch point error may occur according to an input direction (e.g., from the left hand or the right hand) and the finger area of the user, regardless of the user's intentions.

### SUMMARY OF THE INVENTION

Aspects of the present invention address at least the above problems and/or disadvantages and provide at least the advantages described below. Accordingly, an aspect of the present invention is to provide an apparatus and method for reducing a touch input error of a QWERTY keypad in a portable terminal.

Another aspect of the present invention is to provide an apparatus and method for reducing the touch input error of a QWERTY keypad in a portable terminal by controlling the touch input range of the QWERTY pad.

Another aspect of the present invention is to provide an apparatus and method for determining a user touch input region on a basis of the X-axis information of a QWERTY keypad in a portable terminal.

Another aspect of the present invention is to provide an apparatus and method for changing the X-axis information of a QWERTY keypad according to an input pattern of a user in a portable terminal.

In accordance with an aspect of the present invention, an apparatus for touch input in a portable terminal is provided. The apparatus includes a pattern determining unit for determining an input pattern of a user by analyzing a touch input generated at a point outside an input region set to input data, and an input determining unit for determining candidate input regions in a vicinity of coordinates of the touch input point and for estimating a desired input region of the user among the candidate input regions on a basis of the input pattern of the user.

In accordance with another aspect of the present invention, a method for touch input in a portable terminal is provided. The method includes obtaining coordinates of a touch input point when it is determined that a touch input is generated at a point outside an input region set to input data, determining candidate input regions in a vicinity of the coordinates of the touch input point, and estimating a desired input region of a user among the candidate input regions on a basis of the input pattern of a user.

Other aspects, advantages, and salient features of the invention will become apparent to those skilled in the art from the following detailed description, which, taken in conjunction with the annexed drawings, discloses exemplary embodiments of the invention.

### BRIEF DESCRIPTION OF THE DRAWINGS

The above and other aspects, features, and advantages of certain exemplary embodiments of the present invention will be more apparent from the following description taken in conjunction with the accompanying drawings, in which:

FIG. 1 is a block diagram of a portable terminal according to an exemplary embodiment of the present invention;

FIG. 2 is a flow diagram illustrating a process for determining a touch input of a user in a portable terminal according to an exemplary embodiment of the present invention;

FIG. 3 is a flow diagram illustrating a process for changing a predetermined input region of a QWERTY keypad in a portable terminal according to an exemplary embodiment of the present invention;

FIG. 4 is a flow diagram illustrating a process for determining a touch input of a user in a portable terminal according to another exemplary embodiment of the present invention;

FIG. 5A is a diagram illustrating a configuration of a QWERTY keypad of a general portable terminal according to the related art;

FIG. 5B is a diagram illustrating a configuration of a QWERTY keypad of a portable terminal according to an exemplary embodiment of the present invention;

FIG. 6A is a diagram illustrating a state of determining a touch input of a user at a point outside an input region in a portable terminal according to an exemplary embodiment of the present invention;

FIG. 6B is a diagram illustrating a process for determining a candidate input region corresponding to a touch input of a user in a portable terminal according to an exemplary embodiment of the present invention; and

FIG. 6C is a diagram illustrating a process for determining a desired touch input region of a user in a portable terminal according to an exemplary embodiment of the present invention.

Throughout the drawings, it should be noted that like reference numbers are used to depict the same or similar elements, features, and structures.

### DETAILED DESCRIPTION OF EXEMPLARY EMBODIMENTS

The following description with reference to the accompanying drawings is provided to assist in a comprehensive understanding of exemplary embodiments of the invention as defined by the claims and their equivalents. It includes various specific details to assist in that understanding but these are to be regarded as merely exemplary. Accordingly, those of ordinary skill in the art will recognize that various changes and modifications of the embodiments described herein can be made without departing from the scope and spirit of the invention. In addition, descriptions of well-known functions and constructions may be omitted for clarity and conciseness.

The terms and words used in the following description and claims are not limited to the bibliographical meanings, but, are merely used by the inventor to enable a clear and consistent understanding of the invention. Accordingly, it should be apparent to those skilled in the art that the following description of exemplary embodiments of the present invention is provided for illustration purpose only and not for the purpose of limiting the invention as defined by the appended claims and their equivalents.

It is to be understood that the singular forms "a," "an," and "the" include plural referents unless the context clearly dictates otherwise. Thus, for example, reference to "a component surface" includes reference to one or more of such surfaces.

By the term "substantially" it is meant that the recited characteristic, parameter, or value need not be achieved exactly, but that deviations or variations, including for example, tolerances, measurement error, measurement accuracy limitations and other factors known to those of skill in the art, may occur in amounts that do not preclude the effect the characteristic was intended to provide.

Exemplary embodiments of the present invention include an apparatus and method for adaptively changing a key input range of a QWERTY keypad in a portable terminal to accurately determine a touch input of a user. In the following description, a touch input region corresponds to an input button displayed on the QWERTY keypad, and an input range of an input region corresponds to a touch input range capable of inputting data corresponding to the input region. Also, a point outside the input region corresponds to a region that is not used for data input while being displayed on the QWERTY keypad. If the user touches a point outside the input region, the portable terminal does not perform a data input corresponding to the touch point.

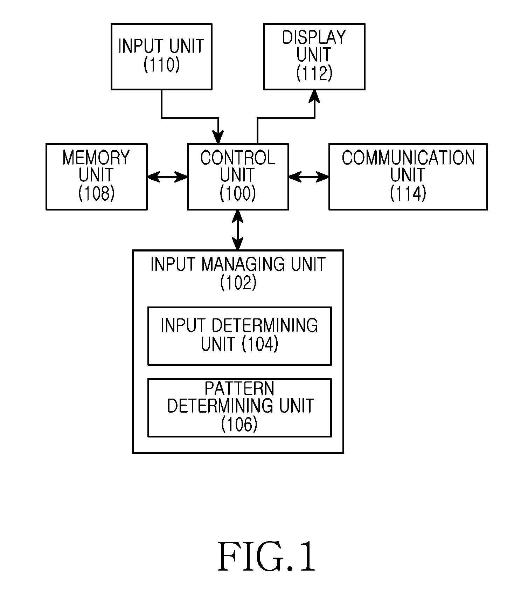

FIGs. 1 through 6C, described below, and the various exemplary embodiments of the present invention provided are by way of illustration only and should not be construed in any way that would limit the scope of the present invention. Those skilled in the art will understand that the principles of the present disclosure may be implemented in any suitably arranged communications system. The terms used to describe various exemplary embodiments of the present invention provided to merely aid the understanding of the description, and that their use and definitions in no way limit the scope of the invention. Terms first, second, and the like are used to differentiate between objects having the same terminology and are in no way intended to represent a chronological order, unless where explicitly state otherwise. A set is defined as a non-empty set including at least one element.

FIG. 1 is a block diagram of a portable terminal according to an exemplary embodiment of the present invention.

Referring to FIG. 1, the portable terminal may include a control unit 100, an input managing unit 102, a memory unit 108, an input unit 110, a display unit 112, and a communication unit 114. The input managing unit 102 may include an input determining unit 104 and a pattern determining unit 106. The portable terminal may include additional units that are not illustrated here merely for sake of clarity. Similarly, the functionality of two or more of the above units may be integrated into a single component.

The control unit 100 controls an overall operation of the portable terminal. For example, the control unit 100 processes and controls voice communication and data communication. In addition to the general functions, the control unit 100 may analyze the touch input coordinates of a user if the touch input is generated for a predetermined time, determines the touch input pattern of the user, and resets the touch input range according to the determined pattern.

When determining a user touch input at a point outside the input region of a QWERTY keypad, the control unit 100 compares the distances between the touch input point and input regions in the vicinity to determine a desired touch input region of the user.

For example, based on the fact that the user typically performs a touch input in a vicinity of a center of an input region of the QWERTY keypad, the control unit 100 controls the input managing unit 102 to compare distances from the touch input point outside the input regions to centers (center coordinates) of the input regions.

Under the control of the control unit 100, the input managing unit 102 determines a user touch input, determines a user touch input pattern, and resets the touch input range according to the determined pattern. That is, when determining a user touch input at a point outside the input region on the QWERTY keypad, the input managing unit 102 estimates a desired touch input region of the user and performs an operation corresponding to the estimated input region.

Under the control of the input managing unit 102, when determining a user touch input at a point outside the touch input region, the input determining unit 104 estimates a desired touch input region of the user.

Herein, the input determining unit 104 generates a list of input regions in a vicinity of the point outside the touch input region, and obtains the X-axis information of the input region included in the list.

Thereafter, the input determining unit 104 determines an input region with a small X-axis distance from the user touch input point, and estimates the desired touch input region of the user to be the determined input region. This is based on the fact that the user performs a touch input in a vicinity of the touch input range and a touch input error occurs due to the touch input pattern (physical characteristics) of the user. That is, when determining the touch input pattern of the user by another method, the input determining unit 104 may determine the user touch input region according to the touch input pattern of the user.

The pattern determining unit 106 analyzes the touch input pattern of the user to control the input region of the QWERTY keypad. That is, the pattern determining unit 106 determines whether the user performs an upper touch or a lower touch with respect to the input region, and adjusts (extends) the Y-axis information of the input region of the QWERTY keypad according to the determination result to prevent a user touch input error.

The memory unit 108 may include a Read Only Memory (ROM), a Random Access Memory (RAM), a flash ROM, or other similar storage devices. The ROM stores various reference data and microcodes of a program for the process and control of the control unit 100 and the input managing unit 102.

The RAM is a working memory of the control unit 100, which stores temporary data that are generated during the execution of various programs. The flash ROM stores various updatable data such as a phone book, outgoing messages, incoming messages, user touch input points, and other similar data.

The input unit 110 includes numeric keys of digits 0-9 and a plurality of function keys, such as a Menu key, a Cancel (Delete) key, a Confirmation key, a Talk key, an End key, an Internet connection key, Navigation keys (or Direction keys), character input keys and other similar input keys and buttons. The input unit 110 provides the control unit 100 with key input data that corresponds to a key pressed by the user.

The display unit 112 displays a QWERTY keypad, numerals and characters, moving pictures, still pictures and status information generated during an operation of the portable terminal. The display unit 112 may be a color Liquid Crystal Display (LCD), an Active Mode Organic Light Emitting Diode (AMOLED) display, or other similar display apparatuses. If the display unit 112 has a touch input device and is applied to a touch input type portable terminal, it can be used as the input unit 110.

The communication unit 114 transmits/receives Radio Frequency (RF) signals inputted/outputted through an antenna (not illustrated). For example, in a transmitting (TX) mode, the communication unit 114 channel-encodes, spreads and RF-processes TX data prior to transmission. In a receiving (RX) mode, the communication unit 114 converts a received RF signal into a baseband signal and despreads and channel-decodes the baseband signal to restore the original data

The control unit 100 of the portable terminal may be configured to perform the function of the input managing unit 102. Although separate units are provided for respective functions of the control unit 100, the control unit 100 may be configured to perform all or some of the functions on behalf of such separate units.

A description has been given of an apparatus for adaptively changing the key input range of a QWERTY keypad to accurately determine a touch input of a user in a portable terminal, according to an exemplary embodiment of the present invention. Hereinafter, a description will be given of a method for determining a user touch region on a basis of the X-axis information of a key input region when determining a user touch input outside the touch input range of the QWERTY keypad, according to an exemplary embodiment of the present invention.

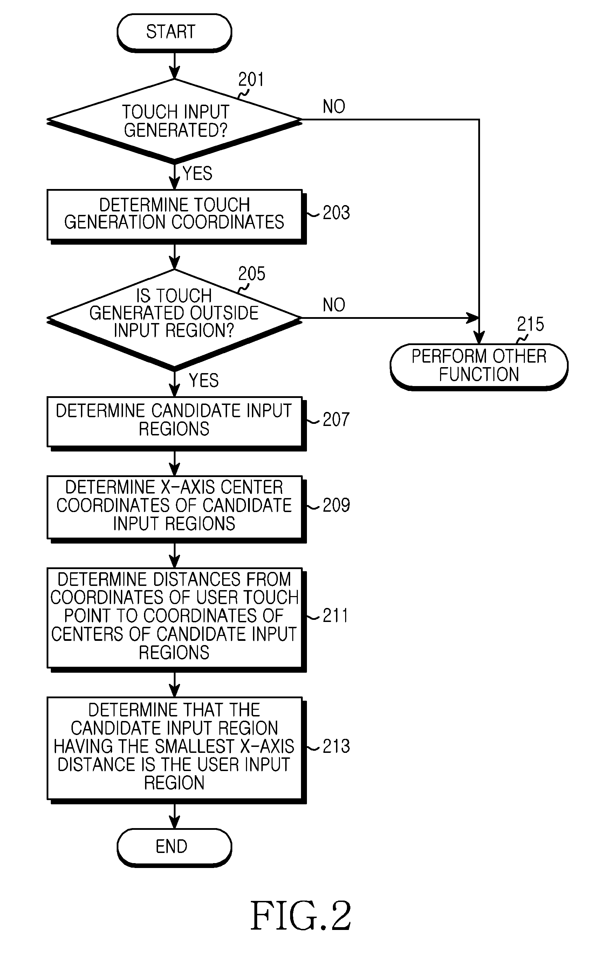

FIG. 2 is a flow diagram illustrating a process for determining a touch input of the user in the portable terminal according to an exemplary embodiment of the present invention.

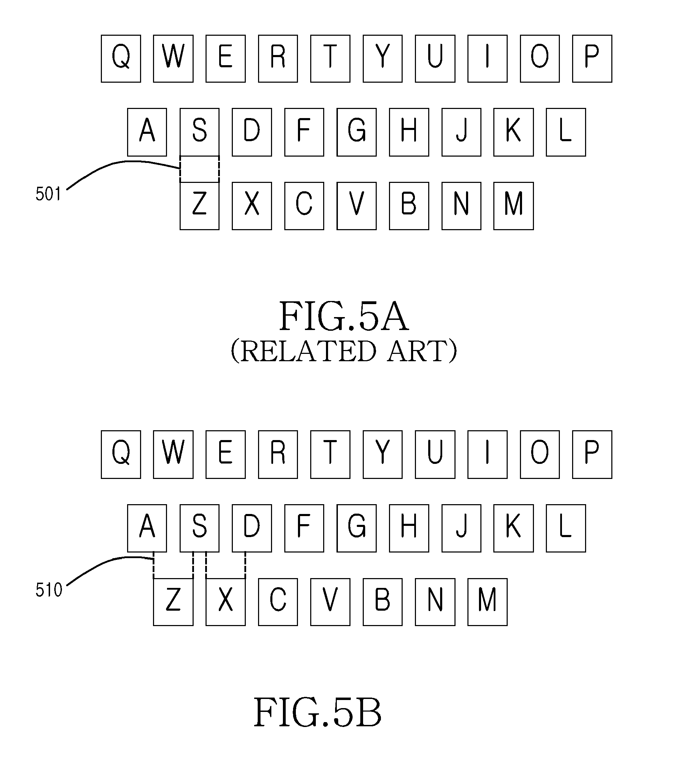

Referring to FIG. 2, the portable terminal includes a QWERTY keypad including a plurality of touch inputs (e.g., alphabet buttons), wherein the X-axis center of each touch input region does not accord with the X-axis centers of other key input regions in the vicinity. The configuration of the QWERTY keypad will be described below in detail with reference to FIG. 5.

Referring to FIG. 2, in step 201, the portable terminal determines whether a touch input is generated from the user.

If it is determined that a touch input is not generated from the user in step 201, the portable terminal proceeds to step 215. In step 215, the portable terminal performs another function (e.g., an idle mode).

On the other hand, if it is determined that a touch input is generated from the user in step 201, the portable terminal proceeds to step 203. In step 203, the portable terminal determines touch generation coordinates of the touch input. In step 205 it is determined whether the user touch input is generated at a point outside an input region.

Herein, the input region corresponds to a key region of the QWERTY keypad capable of data input by a touch input of the user, and the point outside the input region corresponds to a non-key region that is not used for data input and divides and separates the input region from other input regions in the vicinity.

If the user touch input is not generated at a point outside the input region in step 205, that is, if the user touch input is generated in the input region of a key of the QWERTY keypad, the portable terminal proceeds to step 215. In step 215, the portable terminal performs another function (e.g., a function corresponding to the input region).

On the other hand, if it is determined in step 205 that the user touch input is generated at a point outside the input region, the portable terminal proceeds to step 207. In step 207, the portable terminal determines candidate input regions. Herein, the portable terminal defines input regions, located in the vicinity of the user touch point, as candidate input regions, and determines candidate input regions for a desired touch input region of the user in a case where the user does not accurately touch the desired touch input region.

In step 209, the portable terminal determines the X-axis coordinates of the center coordinates of the candidate input regions determined in step 207. In step 211, the portable terminal determines the distances from the coordinates of the user touch point to the coordinates of the centers of the candidate input regions.

In step 213, on the basis of the determined distances, the portable terminal determines that the candidate input region of the smallest X-axis distance is the desired touch input region of the user.

That is, based on the fact that the user performs a touch input in the vicinity of the touch input range and a that touch input error occurs due to the touch input pattern of the user, the portable terminal determines a desired touch input region among the candidate input regions.

When the user touches the QWERTY keypad, the portable terminal may determine the user touch input point by determining (X, Y) coordinates of a touchscreen. Herein, on the assumption that the X-axis center of each touch input region does not accord with the X-axis centers of other key input regions in the vicinity, the portable terminal determines that the candidate input region nearest to the user touch input point is the desired touch input region of the user.

Thereafter, the portable terminal ends the algorithm according to an exemplary embodiment of the present invention.

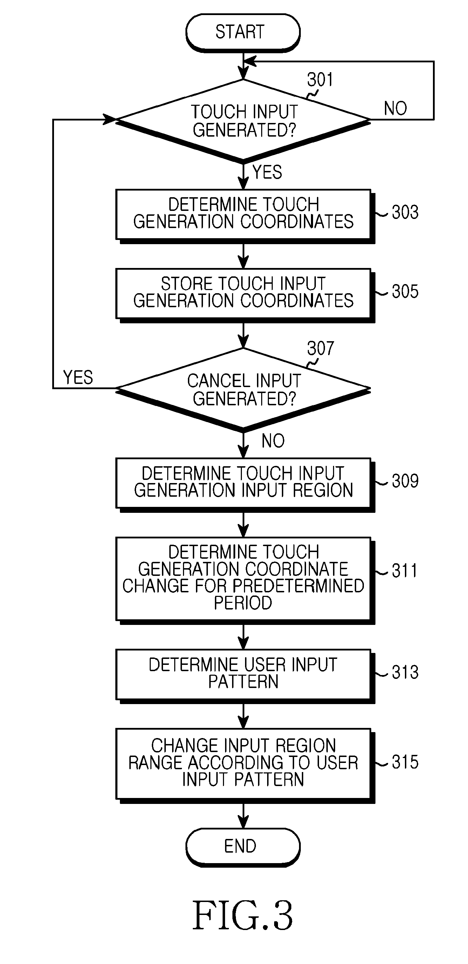

FIG. 3 is a flow diagram illustrating a process for changing a predetermined input region of a QWERTY keypad in a portable terminal according to an exemplary embodiment of the present invention.

Referring to FIG. 3, in step 301, the portable terminal determines whether a touch input is generated by the user.

If it is determined that a touch input is not generated by the user in step 301, the portable terminal again performs an operation of step 301.

If it is determined that a touch input is generated by the user in step 301, the portable terminal proceeds to step 303. In step 303, the portable terminal determines the coordinates of the user touch input point. In step 305, the portable terminal stores the determined touch input generation coordinates.

In step 307, the portable terminal determines whether a cancel input is generated by the user. Herein, the cancel input means an input (e.g., a backspace input) for cancelling an input character through a touch input.

If it is determined that a cancel input is generated by the user in step 307, the portable terminal returns to step 301.

On the other hand, if it is not determined that a cancel input is generated by the user in step 307 (e.g., a touch of another region, or a touch of a character input button), the portable terminal proceeds to step 309. In step 309, the portable terminal determines an input region corresponding to the touch input point. In step 311, the portable terminal determines a touch generation coordinate change for a predetermined period.

That is, the portable terminal analyzes the user touch input coordinates to determine a user input pattern.

For example, if the user repeats a character input touch and a cancel input touch and performs a normal touch input, the portable terminal may determine the user input pattern from a touch generation coordinate change.

In step 313, the portable terminal determines the user touch input pattern on a basis of the touch generation coordinate change determined in step 311. In step 315, the portable terminal changes the input range of the input region according to the user input pattern.

For example, assume that a user of the portable terminal attempts to touch an alphabet 'H' having input region coordinates (1, 5). In this case, the portable terminal performs the following operations. Herein, the input region coordinates (1, 5) are the center coordinates of the input region, and the input range of the input region extends from the center coordinates by a predetermined value.

If the user has attempted to touch the input region but the coordinates of the touch input point according to the input pattern are (1, 3), the alphabet 'H' is not displayed, because the coordinates do not correspond to the input region. Accordingly, the user cancels the incorrectly-input character through a backspace input, and reattempts a touch input in the vicinity of the input region.

If the coordinates according to the user touch input are (1, 4) corresponding to the input region, an alphabet 'H' is displayed and a cancel input is not generated by the user, the user determines the input pattern of frequency performing a lower touch input with respect to the input region, and the portable terminal may extend a range of the input region downward by a predetermined amount. Herein, the portable terminal may extend the range of the input region to the Y axis for the normal touch input (from (1, 5) to (1, 4)).

Also, as described with reference to FIG. 2, the portable terminal determines the input pattern of the user by the input region determined on the basis of the distance of the X-axis coordinates of the input region, and resets the range of the input region to a range corresponding to the user input pattern.

Thereafter, the portable terminal ends the algorithm according to an exemplary embodiment of the present invention.

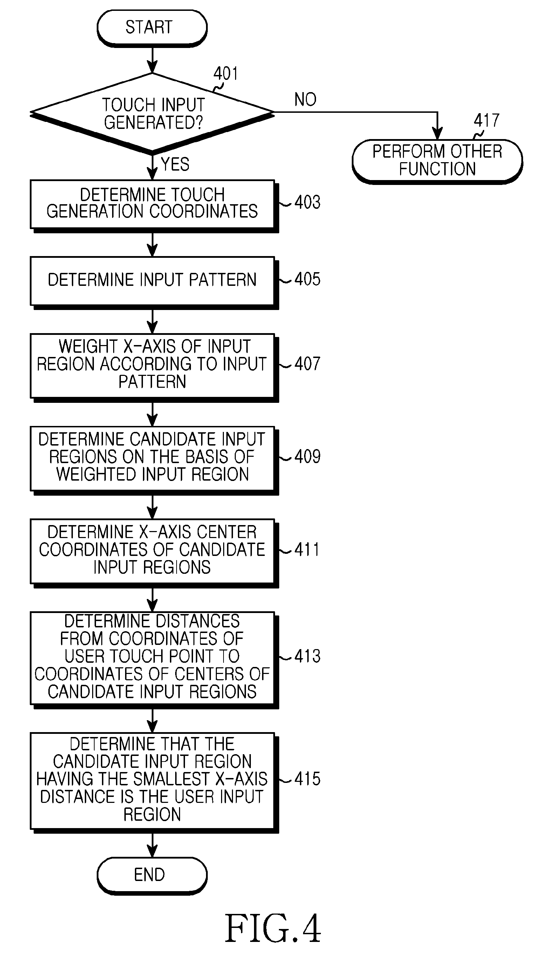

FIG. 4 is a flow diagram illustrating a process for determining a touch input of a user in a portable terminal according to another exemplary embodiment of the present invention.

Referring to FIG. 4, the portable terminal performs the process of FIG. 2 and the process of FIG. 3 in an integrated manner.

In step 401, the portable terminal determines whether a touch input is generated from the user.

If it is not determined that a touch input is generated from the user in step 401, the portable terminal proceeds to step 417. In step 417, the portable terminal performs another function (e.g., an idle mode).

On the other hand, if it is determined that a touch input is generated from the user in step 401, the portable terminal proceeds to step 403. In step 403, the portable terminal determines touch input generation coordinates. In step 405, the portable terminal determines an input pattern of the user by the determined coordinates of the touch input generated by the user.

In step 407, the portable terminal extends a range of the input region by weighting the X axis of the input region (e.g., the input region of a QWERTY keypad) according to the input pattern determined in step 403. In step 409, the portable terminal determines candidate input regions on a basis of the weighted input region.

In step 411, the portable terminal determines the X-axis coordinates of the center coordinates of the candidate input regions determined in step 409. In step 413, the portable terminal determines distances from the coordinates of the user touch point to the coordinates of the centers of the candidate input regions.

In step 415, on a basis of the determined distances, the portable terminal determines that the candidate input region of the smallest X-axis distance is the desired touch input region of the user.

Thereafter, the portable terminal ends the algorithm according to an exemplary embodiment of the present invention.

FIGs. 5A and 5B are diagrams illustrating a comparison of a QWERTY keypad of a portable terminal of the related art and a QWERTY keypad of a portable terminal according to an exemplary embodiment of the present invention.

FIG. 5A is a diagram illustrating a configuration of a QWERTY keypad of a portable terminal of the related art.

Referring to FIG. 5A, the QWERTY keypad of the related art has a shape of a keyboard, and includes a plurality of lines with a plurality of input regions in each line.

The QWERTY keypad of the related art is configured such that some input regions of the second line have the same center lines as corresponding input regions of the third line.

For example, the center of the 'S' key input region and the center of the 'Z' key input region below it are located on the same vertical straight line 501.

FIG. 5B is a diagram illustrating a configuration of a QWERTY keypad of a portable terminal according to an exemplary embodiment of the present invention.

Referring to FIG. 5B, the QWERTY keypad according to an exemplary embodiment of the present invention is configured such that the input region of a key of the second line does not have the same center line as the input region of a key of the first line or a key of the third line.

In the QWERTY keypad of the related art, the X-axis center of the 'S' key input region and of the 'Z' key input region below it are located on the same vertical straight line. However, in the QWERTY keypad according to an exemplary embodiment of the present invention, the 'Z' key input region 510 is located between the 'S' key input region and the 'A' key input region so that the center of the 'S' key input region or of the 'A' key input region and the center of the 'Z' input region below them are not located on the same straight line.

This is to enable a use of the X-axis coordinates of the candidate input regions to determine a desired touch input region of the user in the portable terminal according to an exemplary embodiment of the present invention.

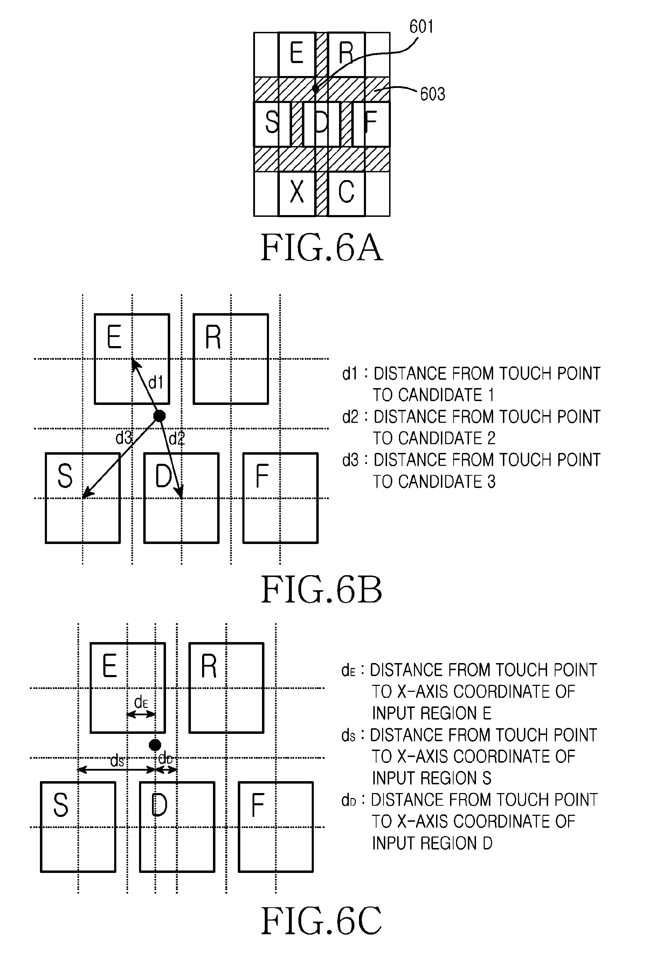

FIGs. 6A to 6C are diagrams illustrating a process for determining a touch input of a user in a portable terminal according to an exemplary embodiment of the present invention.

FIG. 6A is a diagram illustrating a state of determining a touch input of a user at a point outside an input region in a portable terminal according to an exemplary embodiment of the present invention.

Referring to FIG. 6A, the user of the portable terminal has attempted to touch a 'D' key input region, but the touch input is performed at a point above the 'D' key input region due to the user's input pattern.

The touch input point 601 is a point outside the input region (i.e., in a shaded region 603), and a character input corresponding to the user touch input is unknown.

FIG. 6B is a diagram illustrating a process for determining a candidate input region corresponding to a touch input of the user in the portable terminal according to an exemplary embodiment of the present invention.

Referring to FIG. 6B, if it is determined that the touch input occurs at a point outside an input region, the portable terminal determines candidate input regions in the vicinity to determine a desired touch input region of the user.

Herein, the portable terminal determines the input regions located within a predetermined distance from the user touch input point. For example, if the portable terminal determines distances from the user touch input point to center points of the input regions in the vicinity, and defines the determined distances as d1 d2, and d3, the portable terminal compares the determined distances with a threshold value to determine candidate input regions.

If the distances d1 d2, and d3 are compared with the threshold value to determine candidate input regions, the portable terminal may determine the input regions E, D, and S corresponding to the candidates 1, 2, and 3, respectively, to be the candidate input regions.

FIG. 6C is a diagram illustrating a process for determining a desired touch input region of a user in a portable terminal according to an exemplary embodiment of the present invention.

Referring to FIG. 6C, after determining candidate input regions as described above with reference to FIG. 6B, the portable terminal determines a desired touch input region of the user on a basis of determined distances from the user touch input point to the candidate input regions.

Herein, it is determined that the user touches an input region, the portable terminal performs a touch input on a basis of the center of the input region. Therefore, the portable terminal may determine that a candidate input region having the same X-axis coordinate as the user touch input point is the desired touch input region of the user.

That is, as illustrated in FIG. 6C, if the distance d_{D} is the smallest among the distances d_{E}, d_{S} and d_{D}, the portable terminal may determine that the user has attempted to touch the input region 'D'.

As described above, when a user touch input is determined to occur at a point outside the touch input range of a QWERTY keypad in a portable terminal, a user touch region is determined on a basis of the X-axis information of a key input region, thereby making it possible to determine and correct a touch input error caused by having to touch a fixed touch input range.

While the invention has been shown and described with reference to certain exemplary embodiments thereof, it will be understood by those skilled in the art that various changes in form and details may be made therein without departing from the spirit and scope of the invention as defined by the appended claims and their equivalents.

## Claims

1. An apparatus for touch input in a portable terminal, the apparatus comprising:
a pattern determining unit (106) adapted for determining an input pattern of a user by analyzing a touch input generated at a point outside an input region set to input data; and
an input determining unit (104) adapted for determining candidate input regions in a vicinity of coordinates of the touch input point, and for estimating a desired input region of the user among the candidate input regions on a basis of the input pattern of the user.

2. The apparatus of claim 1, wherein the apparatus changes an input range of an input region according to the input pattern of the user after determining the input pattern of the user.

3. The apparatus of claim 1, wherein the input determining unit (104) determines input regions located within a predetermined distance from an X-axis coordinate among the coordinates of the touch input point, and defines the determined input regions as the candidate input regions.

4. The apparatus of claim 1, wherein the pattern determining unit (106) determines the touch input pattern of the user by analyzing the coordinates of user touch inputs generated for a predetermined time.

5. The apparatus of claim 1, wherein the input determining unit (104) determines distances from an X-axis coordinate of the touch input point to X-axis coordinates of the candidate input regions, and determines a candidate input region comprising a smallest X-axis distance to the touch input point as the desired input region of the user.

6. The apparatus of claim 1, wherein the input region set to input the data includes a plurality of key input regions, and centers of key input regions of different lines are not located on a same vertical straight line.

7. A method for touch input in a portable terminal, the method comprising:
obtaining coordinates of a touch input point it is determined that a touch input is generated at a point outside an input region set to input data;
determining candidate input regions in a vicinity of the coordinates of the touch input point; and
estimating a desired input region of a user among the candidate input regions on a basis of an input pattern of a user.

8. The method of claim 7, wherein an input range of the input region is changed according to the input pattern of the user after determining the input pattern of the user.

9. The method of claim 7, wherein the determining of the candidate input regions comprises:
obtaining an X-axis coordinate among the coordinates of the touch input point;
determining key input regions located within a predetermined threshold distance from the X-axis coordinate of the touch input point; and
defining the determined key input regions as the candidate input regions.

10. The method of claim 7, wherein the touch input pattern of the user is determined by analyzing coordinates of user touch inputs generated for a predetermined time.

11. The method of claim 7, wherein the estimating of the desired input region of the user comprises:
obtaining an X-axis coordinate among the coordinates of the touch input point;
determining distances from the X-axis coordinate of the touch input point to X-axis coordinates of the candidate input regions; and
determining a candidate input region comprising a smallest X-axis distance to the touch input point as the desired input region of the user.

12. The method of claim 7, wherein the input region set to input the data includes a plurality of key input regions, and centers of key input regions of different lines are not located on a same vertical straight line.
